# EUROPEAN PATENT SPECIFICATION

(11) **EP 0 964 802 B1**
(45) Date of publication and mention of the grant of the patent: **02.07.2003**
(21) Application number: 98906780.6
(22) Date of filing: 06.03.1998
(51) Int. Cl.: B60R 19/00, B60R 19/42

(54) **RESTRAINING SYSTEM FOR TRUCK AND TRAILER WHEELS**
RÜCKHALTESYSTEM FÜR LASTKRAFTWAGEN UND ANHÄNGERWAGEN RÄDER
SYSTEME DE RETENUE DE ROUES DE CAMIONS ET DE REMORQUES

(30) Priority: 07.03.1997 CA 2199426; 27.06.1997 CA 2207692
(43) Date of publication of application: 22.12.1999
(73) Proprietor: Busse, Stuart A., Biggar, Saskatchewan S0K 0M0 (CA)
(72) Inventor: Busse, Stuart A., Biggar, Saskatchewan S0K 0M0 (CA)
(74) Representative: Turi, Michael, Dipl.-Phys.
(86) International application number: CA9800183
(87) International publication number: WO98040245

(56) References cited:
- US-A- 1 560 943
- US-A- 1 998 134
- US-A- 2 002 832
- US-A- 2 621 066

## Description

### FIELD OF THE INVENTION

The present invention relates to a restraining system for wheels of transport trucks and trailers and more particularly relates to a construction which will prevent such wheels, which become accidently detached from secured position on the motoring vehicle, from travelling unrestricted and causing property damage, injury or death.

### BACKGROUND OF THE INVENTION

On highway transport trucks and trailers there are wheels that are bolted in place. There have been truck and trailer wheels and wheel assemblies accidentally detaching from the moving vehicle. Once detached the wheels or assemblies will travel unrestricted causing property damage, injury or death.

At present there is no method of restraining accidentally detached wheels or wheel assemblies on transportation vehicles. The standard at present is to rely upon the installation of the wheel and wheel assembly without any secondary restraining mechanism. This system allows for the original installation mechanism to fail totally and still retain the wheel or wheel assembly to the vehicle.

The wheel assembly, when in operation, is a relatively heavy rotating mass that is mounted on an axle, using bearings and a wheel hub. Problems will arise when the wheel breaks or separates from the wheel hub, the wheel bearing and/or wheel hub fail or the axle breaks. In these situations, some or all of the wheel assembly will separate from the vehicle and will not be restrained.

In all of these failing situations, the portion of the wheel or wheel assembly that is detached must move away from the vehicle in unrestrained fashion.

Document US-2,002,832 discloses a guard rail or bumper system for protecting a semi-trailer and its associated tow-car against injury, comprising a cage assembly extending around the rear and sides of the semi-trailer. Said cage being interrupted adjacent the wheels of the semi-trailer and of the tow-car by a cage section bridging the interrupted portions, passing laterally along an exterior side of the wheel, so as to leave a lower part of the wheel exposed, to allow the wheel to contact a road and have unobstructed movement during normal operation of the vehicle.

Document US-2-627,437 of M.H. Toncray et al issued February 3, 1953, discloses an automobile frame construction extending longitudinally of the body. The body comprises paired inner and outer longitudinally side frame members at each side and additionally frame members which together constitute a cross frame, which is in supported relation and secured to the outer side frame members substantially below the upper edges thereof.

Document US-5,462,324 of Bowen et al, issued October 31, 1995, describes a wheel guard attachment for motor vehicles. This attachment includes safety guards for deflecting objects from in front of at least of one of the vehicles wheels so as to prevent the object from being run-over and crushed by the at least one wheel. The guard is mounted in that way, so as to allow the wheel to contact a road and have unobstructed movement during normal operation of the vehicle and such that any object positioned in front of the at least one vehicles wheel will be deflected by the safety guard transversally outwardly with respect to the body of the vehicle in order to prevent the object from being run-over and crushed by the wheel.

### SUMMARY OF THE INVENTION

In accordance with the present invention there is provided a restraining system for an axle mounted wheel of a vehicle, the vehicle having a frame to which the axle is secured, leaving sufficient clearance to avoid road hazards and not interfere with the wheels motion during normal operation of the vehicle. The system comprises a cage assembly secured to the frame of the vehicle and passing in front of, laterally along an exterior side of, and behind the wheel so as to leave a lower part of the wheel exposed to allow the wheel to contact a road and have unobstructed movement during normal operation of the vehicle, and to retain the wheel in close proximity to its original installation point and entrap the wheel and carry it along with the vehicle should it become detached from the axle.

In a preferred embodiment of the present invention the cage comprises a series of bars secured to the frame and extending downwardly therefrom, in front of, behind, and along an exterior side of, the wheel.

The cage in accordance with the present invention restrains accidently detached vehicle wheels from escaping from the moving vehicle by surrounding the wheel or wheel assembly.

### BRIEF DESCRIPTION OF THE DRAWINGS

These and other advantages of the invention will become apparent upon reading the following detailed description and upon referring to the drawings in which:-
**FIGURE 1** is a perspective view of a restraining system for vehicles in accordance with the present invention, as applied to a transport trailer;
**FIGURE 2** is a side view of the system of FIGURE 1;
**FIGURE 3** is a plan view from the bottom of the system of FIGURE 1;
**FIGURE 4** is a schematic plan view, from below, of an alternative embodiment of a wheel restraining system in accordance with the present invention as applied to a trailer;
**FIGURE 5** is a schematic plan view, from below, of yet a further alternative embodiment of a wheel restraining system in accordance with the present invention as applied to a trailer; and

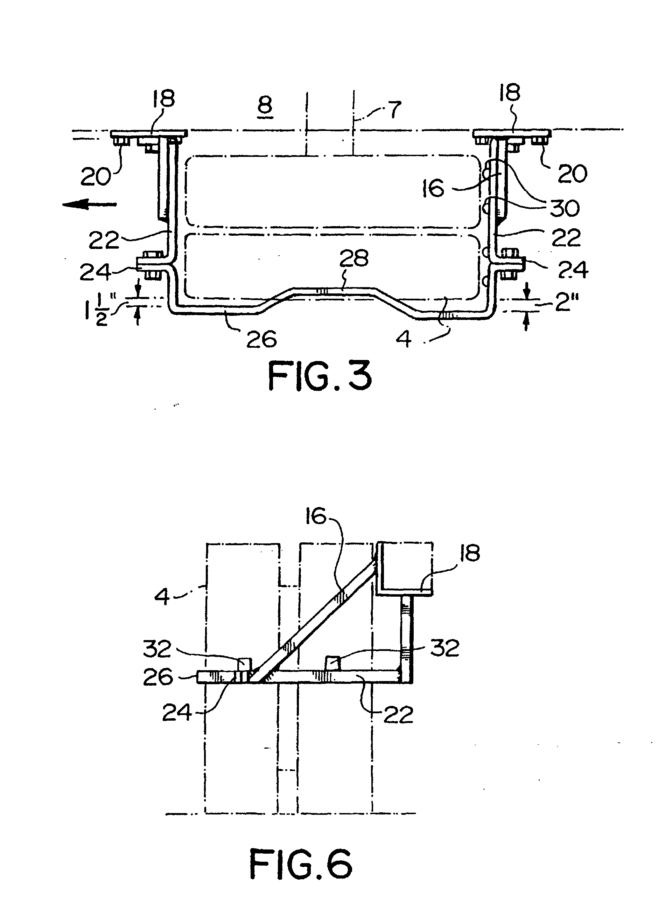

**FIGURE 6** is a schematic, partial, elevational view, from the rear, of a wheel assembly of a vehicle on which an alternative embodiment of wheel restraining system according to the present invention has been mounted.

While the invention will be described in conjunction with example embodiments, it will be understood that it is not intended to limit the invention to such embodiments. On the contrary, it is intended to cover all alternatives, modifications and equivalents as may be included within the spirit and scope of the invention as defined by the appended claims.

### DETAILED DESCRIPTION OF THE PREFERRED EMBODIMENTS

In the following description, similar features in the drawings have been given similar reference numerals.

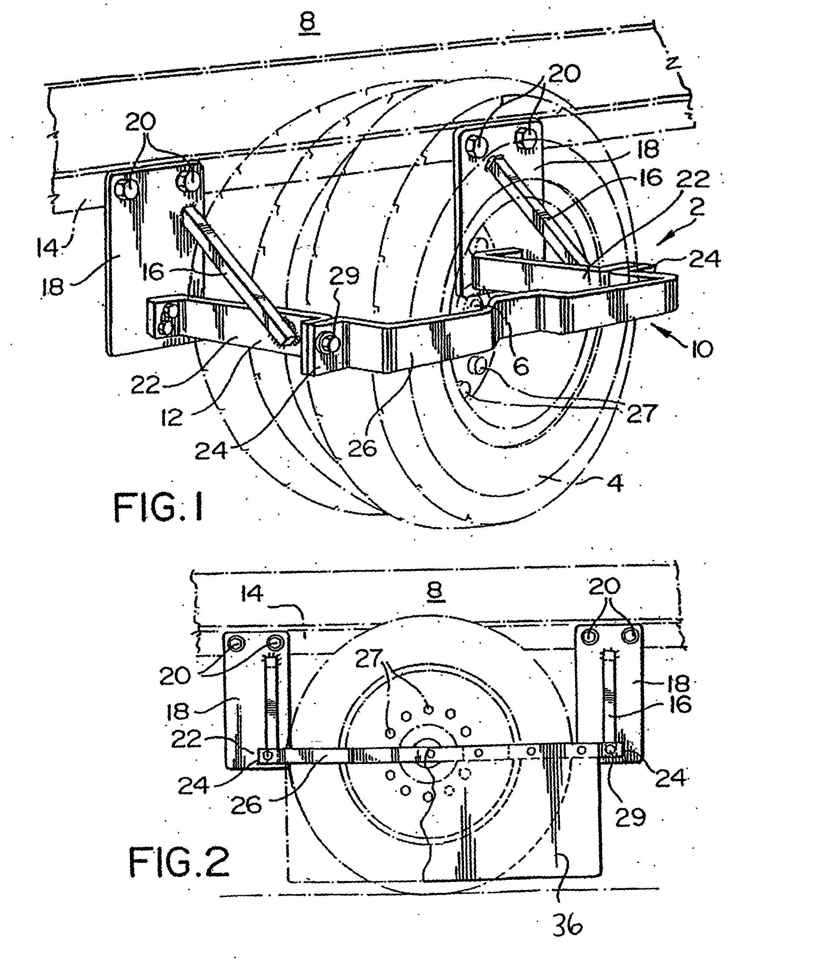

Turning to FIGURE 1, there is shown a restraining system 2 for wheels 4 which are mounted on hub 6 secured to axle 7 of a trailer 8. Restraining system 2 comprises a cage 10 made of bars or plates 12, preferably made from spring steel. Cage 10 is welded or otherwise secured to the frame 14 of trailer 8 and is constructed so as to leave only the lower portion of the wheel 4 exposed, allowing wheel contact with the road and to leave sufficient clearance to avoid road hazards. Preferably the cage is supported by appropriate angle braces 16. It has been found that a cage clearance of approximately of two inches at the front and back of the wheel, and one and one-half inches at the front outside of the wheel and two inches at the rear outside of the wheel are appropriate to provide unobstructed operation of the vehicle under normal circumstances. The outside clearance for the wheel should be less than the distance the wheel must move laterally and outwardly to come off hub 6. As well, by having the front outside clearance slightly less than the rear outside clearance, if a wheel should become detached during forward movement of the vehicle, the cage will act to steer the wheel inwardly and back into position on the wheel hub 6.

In operation, restraining bars 12 of the cage 10, prevent the wheel 4 from escaping either away from (to the side)-or under the vehicle.

Of course, the actual physical construction of cage 10 can vary. The extent of covering of cage 10, as well as the location of bars 12 on the side, would be dictated by the requirements and appearance of the vehicle or trailer that the wheel cage 10 is mounted on. The wheel cage should be of sufficient strength and attachment to withstand the load of the vehicle on the cage without total destruction or detachment.

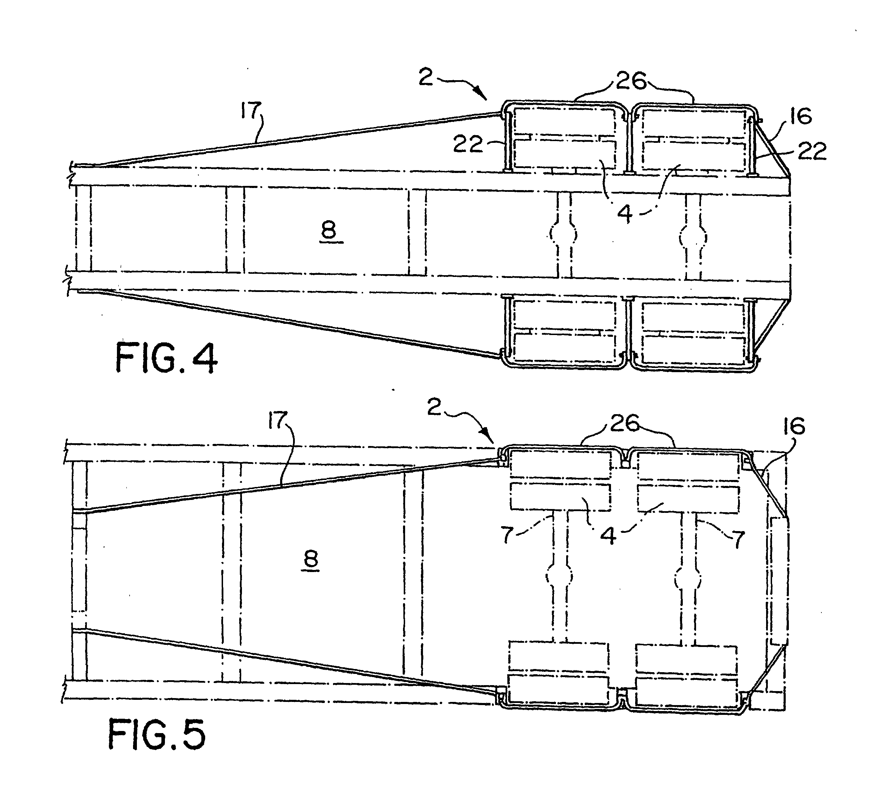

Alternative constructions of cages, illustrated in FIGURES 4 and 5, show such constructions for trailers where the wheels 4 extend outwardly beyond the side of the frame 14 (FIGURE 4) and where the wheels 4 are located under frame 14 (FIGURE 5). In these embodiments, the securing of cage 10 on frame 14 is further reinforced by angled connecting bars 17 extending between and secured to portions of the frame and spaced locations on the frame 14, as illustrated.

Cage 10 could have optional plates or belting (not illustrated) that would act as fenders and/or mud flaps. As well, using the cage 10 as a secure mounting place, optional side bumpers (again, not illustrated) could be mounted alongside, both forward and back of the wheel cage, of the vehicle to offer some protection against other vehicles or persons becoming entrapped under the wheel and thereby substantially reduce the risk to users of the road.

Various warning flags, sensors and warning devices may be attached as desired to the restraining bars 12 of cage 10, or other suitable place, to draw the vehicle operator's attention to a detached wheel or wheel assembly that is being restrained.

The wheel restraining cage 10 according to the present invention may be securely mounted to the frame of the vehicle using, for example, a mounting plate 18 attached to the frame by bolts 20. The mounting plate has arms 22 attached to it, extending laterally from the frame of the vehicle in very close proximity to the wheel. Those arms 22 are made of metal tubing or plates and are fixed in their position. These arms extend outwardly to about one to two inches from the outside edge of the tire 4 of the wheel assembly. At the outside edge of arms 22 is a mounting plate 24 for the attachment of the side restraining arms or plates 26. (Arms 22 and 26 form the restraining bars 12 for cage 10.) In this manner, if a wheel 4 comes loose from its bolted position on the wheel assembly, that wheel will be restricted from lateral movement by coming into contact with the metal tube or plate arm 26 in question. There are two arms 22 for each wheel 4 that is to be restrained, with one arm 22 in front of the wheel 4 and one arm 22 in back thereof, with about a two inch clearance between the front of the tire and the front arm 22, and about a two inch clearance between the rear arm 22 and the back of wheel 4. The arms 22 may be configured so that they angle downwardly such that the exterior end of each arm will be at the same elevation as the center of the wheel 4 and its associated hub 7 and axle 6.

The side restraining arm or plate 26 is configured such that it extends laterally, spaced from the frame of the vehicle, from its points of attachment to arms 22, with a clearance of about one and one half inches from the outer edge of its associated tire 4 at the front and a clearance of about two inches at the outer edge of the rear of the tire 4. The restraining arm 26 runs parallel to the outside edge of the rubber tire, being attached at each end to arms 22. The center of the restraining arm 26, at bar 28 may extend about three to three and one half inches inwardly towards the frame towards the center of the wheel axle 7.

This arrangement is completed for each wheel assembly of the vehicle except for any steering axles.

The components of the wheel cage 10 are manufactured such that clearance from the operating wheel is kept to a minimum so that those portions of the wheel or wheel assembly that may accidently detach from their operating position are restrained within the wheel cage 10.

As an option, a mechanism (not illustrated) may be installed to . prevent vehicles or people from accidently going under transport trucks or trailers during a side on contact or to keep such from being trapped by the wheel assembly. By using the secure mount of the wheel cage and installing another similar secure mount further along the side of the truck and/or trailer, a side bumper would be installed to protect against vehicles or people from entering under the subject vehicle.

It will be understood that the bolts 29 supporting side arm 26 may be removed so as to permit removal of the arm 26 from arms 22 when purposeful removal of the tire, for example, for repairs or replacement, is required. The level of side arm 26, as seen in FIGURES 1 and 2, for certain constructions of wheel assemblies or certain applications, may be secured in a raised position (not illustrated) with respect to the tire hubs, or in a lower position (again not illustrated) with respect thereto.

The cage 10 components may be made of metal or other materials such as sturdy plastic or a combination thereof. Cage 10 may alternatively have its components made of flexible material such as spring steel so that it will resume its original shape if bumped by something externally.

As an optional embodiment of the wheel cage, according to the present invention, a rotating or low friction part 30, such as a wheel or bearings or a skid plate, mounted on arm 26, illustrated for example in FIGURE 3, may be provided so as to facilitate continued rotation of a detached wheel 4 when it comes in contact with that portion of the arm 26. A sensor 32 may also be associated with that part to detect a change in its operation or condition, and provide a signal, for example audibly or electronically to the driver's cab, to alert the driver to a problem of a disassociated, or becoming-disassociated wheel.

As another optional embodiment, a flexible curtain 36 (shown in Figure 2), for example of rubber, may be suspended from arm 26, and/or arms 22 to minimize spray from proximal wheels 4 when on wet roads.

Thus, it is apparent that there has been provided in accordance with the invention a restraining system for truck and truck wheels that fully satisfies the objects, aims and advantages set forth above.

## Claims

1. A restraining system (2) for an axle (7) mounted wheel (4) of a vehicle, the vehicle having a frame (14) to which the axle (7) is secured, leaving sufficient clearance to avoid road hazards and not interfere with the wheels (4) motion during normal operation of the vehicle, the system comprising a cage (10) assembly secured to the frame (14) and passing in front of, laterally along an exterior side of, and behind the wheel (4), of the vehicle so as to leave a lower part of the wheel (4) exposed, to allow the wheel (4) to contact a road and have unobstructed movement during normal operation of the vehicle and to retain the wheel (4) in close proximity to its original installation point and entrap the wheel (4) and carry it along with the vehicle should it become detached from the axle (7).

2. A system according to claim 1 wherein the cage (10) comprises a series of bars (12) secured to the frame (14) and extending downwardly therefrom, and in front of, behind and along an exterior side of, the wheel (4).

3. A system according to claim 2 wherein a side bar (26) is one of the series of bars (12) and extends beside the wheel (4) about its midpoint.

4. A system according to claim 3 wherein the side bar (26) provides a lesser clearance from the outer edge of its associated wheel (4) at the front than from the outer edge of the rear of that wheel (4), whereby the wheel (4), if it has come off of the axle (7), during forward movement of the vehicle, will be steered by the series of bars (12) inwardly at the front and hence back towards the axle (7).

5. A system according to claim 2 wherein, during normal operation of the vehicle, the cage (10) provides a clearance of from about one to two inches on an exterior side of the wheel.

6. A system according to claim 4 wherein the series of bars (12) provides a clearance of approximately one and a half inches from the outer edge of its associated wheel (4) at the front and about two inches at the outer edge of the rear of that wheel (4), whereby the wheel (4), if it has come off of the axle (7) during movement of the vehicle, will be directed back towards the axle (7).

7. A system according to claim 1 wherein the cage (10) is made of spring steel.

8. A system according to claim 3 wherein the side bar (26) has a central portion which is positioned inwardly towards the axle (7).

9. A system according to claim 3 wherein the side bar (26) provides a clearance of approximately one and a half inches from the outer edge of its associated wheel (4) at the front and about two inches at the outer edge of the rear of that wheel (4), whereby the wheel (4), if it has come off of the axle (7) during movement of the vehicle, will be directed back towards the axle (7).

10. A system according to claim 8 wherein the side bar (26) has a central portion which is positioned inwardly towards the axle (7).

11. A system according to claim 3 wherein the side bar (26) has a clearance with respect to the outside of the wheel (4) which is less than the distance the wheel (4) must move laterally and outwardly to come off an axial mounted hub (6) to which it is normally secured.

12. A system according to claim 1 wherein a flexible curtain (36) is suspended from the side bar (26) to minimize spray from wheel (4) when on wet roads.

## Patentansprüche

1. Rückhaltesystem (2) für ein an einer Achse (7) eines Kraftfahrzeugs montiertes Rad (4), wobei das Kraftfahrzeug einen Rahmen (14) hat, an dem die Achse (7) befestigt ist, der einen ausreichenden Abstand beläßt, um Straßenrisiken zu vermeiden und die Bewegung der Räder (4) während des normalen Betriebs des Kraftfahrzeugs nicht zu stören, wobei das System eine Käfig-(10)anordnung umfaßt, die an dem Rahmen (14) befestigt ist und vor dem, seitlich entlang einer Außenseite des und hinter dem Rad (4) des Kraftfahrzeugs verläuft, um einen unteren Teil des Rads (4) frei zu lassen, um es dem Rad (4) zu gestatten, eine Straße zu kontaktieren und eine unbeeinträchtigte Bewegung während eines normalen Betriebs des Kraftfahrzeugs zu haben und das Rad (4) in unmittelbarer Nähe zu seiner ursprünglichen Anbringstelle zu halten und das Rad (4) einzuschließen und mit dem Kraftfahrzeug mitzuführen, sollte es sich von der Achse (7) lösen.

2. System nach Anspruch 1, bei welchem der Käfig (10) eine Reihe von Stangen (12) umfaßt, die an dem Rahmen (14) befestigt sind und sich von diesem nach unten erstrecken und vor dem, hinter dem und entlang einer Außenseite des Rads (4).

3. System nach Anspruch 2, bei welchem eine Seitenstange (26) eine aus der Reihe von Stangen (12) ist und neben dem Rad (4), um dessen Mittelpunkt, verläuft.

4. System nach Anspruch 3, bei welchem die Seitenstange (26) einen geringeren Abstand von dem Außenrand ihres dazugehörigen Rades (4) am vorderen Bereich als von dem Außenrand des hinteren Bereichs dieses Rads (4) vorsieht, wobei das Rad (4), wenn es von der Achse (7) abgekommen ist, während einer Vorwärtsbewegung des Kraftfahrzeugs durch die Reihe von Stangen (12) vorne einwärts und folglich zurück in Richtung der Achse (7) gesteuert wird.

5. System nach Anspruch 2, bei welchem während des normalen Betriebs des Kraftfahrzeugs der Käfig (10) einen Abstand von etwa 1 bis 2 inch an einer Außenseite des Rads vorsieht.

6. System nach Anspruch 4, wobei die Reihe von Stangen (12) einen Abstand von etwa eineinhalb inch von dem Außenrand ihres dazugehörigen Rads (4) am vorderen Bereich und etwa zwei inch beim äußeren Rand des hinteren Bereichs des Rads (4) vorsieht, wobei das Rad (4), falls es von der Achse (7) abgekommen ist, während der Bewegung des Kraftfahrzeugs zurück in Richtung der Achse (7) gerichtet wird.

7. System nach Anspruch 1, wobei der Käfig (10) aus Federstahl hergestellt ist.

8. System nach Anspruch 3, bei welchem die Seitenstange (26) einen zentralen Abschnitt hat, der in Richtung der Achse (7) einwärts positioniert ist.

9. System nach Anspruch 3, bei welchem die Seitenstange (26) einen Abstand von etwa eineinhalb inch von dem Außenrand ihres dazugehörigen Rades (4) am vorderen Bereich vorsieht und etwa zwei inch vom äußeren Rand des hinteren Bereichs dieses Rades (4), wobei das Rad (4), wenn es von der Achse (7) abgekommen ist, während der Bewegung des Kraftfahrzeugs zurück in Richtung der Achse (7) gerichtet wird.

10. System nach Anspruch 8, bei welchem die Seitenstange (26) einen zentralen Abschnitt hat, der in Richtung der Achse (7) einwärts positioniert ist.

11. System nach Anspruch 3, bei welchem die Seitenstange (26) in Bezug auf die Außenseite des Rads (4) einen Abstand hat, der geringer ist als der Abstand, um den sich das Rad (4) seitlich und auswärts bewegen muß, um von einer axialen montierten Nabe (6) wegzugelangen, an der es normalerweise befestigt ist.

12. System nach Anspruch 1, bei dem ein flexibler Vorhang (36) von der Seitenstange (26) herunterhängt, um ein Spritzen von einem auf feuchter Straße befindlichen Rad (4) zu minimieren.

## Revendications

1. Système de retenue (2) pour une roue (4) d'un véhicule montée sur un arbre (7), ledit véhicule possédant un châssis (14) auquel l'arbre est fixé, laissant un espace suffisant pour éviter des accidents routiers et pour ne pas interférer avec le déplacement des roues (4) au cours d'une utilisation normale du véhicule, le système comprenant un ensemble formant cage (10) fixé au châssis (14) et passant devant, latéralement le long d'un côté extérieur de, et derrière la roue (4) du véhicule de manière à laisser exposée une partie inférieure de la roue (4), pour permettre à la roue (4) d'entrer en contact avec une route, et opérer un mouvement non perturbé au cours d'une utilisation normale du véhicule, et pour retenir la roue (4) en étroite proximité de son point d'installation initial, entourer la roue (4) et la maintenir contre le véhicule dans le cas ou elle viendrait à être détachée de l'arbre (7).

2. Système selon la revendication 1, dans lequel la cage (10) comprend une série de barreaux (1.2) fixés au châssis (14) et s'étendant vers le bas à partir de celui-ci, ainsi que devant, derrière et le long d'un côté extérieur de la roue (4).

3. Système selon la revendication 2 dans lequel un barreau latéral (26) est l'un de la série de barreaux (12) et s'étend à côté de la roue (4) aux environs de son point central.

4. Système selon la revendication 3 dans lequel le barreau latéral (26) fournit un espace plus faible vis à vis du bord extérieur de la roue associée (4), à l'avant, que vis à vis du bord extérieur à l'arrière de cette roue (4), de sorte que la roue (4), si elle est détachée de l'arbre (7), au cours du déplacement vers l'avant du véhicule, soit guidée vers l'intérieur par la série de barreaux (12) à l'avant, et en conséquence soit redirigée vers l'arbre (7).

5. Système selon la revendication 2 dans lequel, au cours d'une utilisation normale du véhicule, la cage (10) fournit un espace compris entre environ un et deux pouces sur un côté extérieur de la roue.

6. Système selon la revendication 4 dans lequel la série de barreaux (12) fournit un espace de l'ordre de un pouce et demi vis à vis du bord extérieur de la roue associée (4), à l'avant, et de l'ordre de deux pouces vis à vis du bord extérieur de l'arrière de la roue (4), de sorte que la roue (4), si elle est détachée de l'arbre (7) au cours d'un déplacement du véhicule, soit redirigée vers l'arbre (7).

7. Système selon la revendication 1 dans lequel la cage (10) est réalisée en acier élastique.

8. Système selon la revendication 3 dans lequel le barreau latéral (26) possède une partie centrale qui est positionnée vers l'intérieur en direction de l'arbre (7).

9. Système selon la revendication 3 dans lequel le barreau latéral (26) fournit un espace de l'ordre de un pouce et demi vis à vis du bord extérieur de la roue associée (4), à l'avant, et de l'ordre de deux pouces vis à vis du bord extérieur de l'arrière de la roue (4), de sorte que la roue (4), si elle est détachée de l'arbre (7) au cours d'un déplacement du véhicule, soit redirigée vers l'arbre (7).

10. Système selon la revendication 8 dans lequel le barreau latéral (26) possède une partie centrale qui est positionnée vers l'intérieur en direction de l'arbre (7).

11. Système selon la revendication 3 dans lequel le barreau latéral (26) définit un espace vis à vis de l'extérieur de la roue (4) qui est inférieur à la distance sur laquelle la roue (4) doit se déplacer latéralement et vers l'extérieur pour sortir d'un moyeu à montage axial sur lequel elle est fixée normalement.

12. Système selon la revendication 1 dans lequel une paroi flexible (36) est suspendue sous le barreau latéral (26) pour réduire les projections par la roue (4) sur routes humides.
